# EUROPEAN PATENT APPLICATION

(11) **EP 2 251 824 A1**
(43) Date of publication of application: **17.11.2010**
(21) Application number: 10160649.9
(22) Date of filing: 22.04.2010
(51) Int. Cl.: G06Q 10/00

(54) **Industrial energy demand management and services**

(30) Priority: 24.04.2009 US 429881
(71) Applicant: Rockwell Automation Technologies, Inc., Mayfield Heights, OH 44124 (US)
(72) Inventor: Kaufman, Philip John, Milwaukee, WI 53207-4089 (US); Walker, Marcia Elaine, Durham, NC 27713 (US)
(74) Representative: Grünecker, Kinkeldey, Stockmair & Schwanhäusser Anwaltssozietät

(57) **Abstract**

The innovation relates to systems and/or methodologies for facilitating industrial energy demand management and services. A demand management and services component obtains one or more utilization data elements via a communication network. The utilization data elements are instances of discrete data pertaining to sustainability, energy consumption, or emissions by manufacturing and/or facility elements. The demand management and services component analyzes the utilization data elements, and based on the analysis generates a set of user interfaces and/or provides one or more optimizations to improve sustainability and/or energy utilization.

## Description

### TECHNICAL FIELD

The subject innovation relates generally to industrial control and automation, and more particularly systems and/or methodologies for industrial energy demand services and management.

### BACKGROUND

Manufacturers are becoming increasingly concerned with conserving energy and reducing emissions. Growing governmental and political pressure to reduce energy demands and greenhouse gas emissions are forcing manufacturers to explore a wide variety of new techniques and possibilities for reducing energy demands and generation of emissions considered harmful. In addition, the current economic climate is making energy conservation an ever more attractive option for reducing cost and increasing profitability in manufacturing. However, many of the current approaches focus on macro-level energy and emissions reduction techniques.

Typically, available solutions approach energy and emissions management from a facility infrastructure vantage point. For example, a number of techniques are geared towards substations, switchgears, emission monitors, and so forth. These approaches apply estimated production related information against an overall facility's energy data to infer energy performance. Additionally, a number of other approaches focus energy and emission management on a building management level, such as data centers, lighting, chillers, boilers, etc. These approaches are inherently limited by their facility infrastructure or building management level focus.

The current solutions can often be inefficient or provide little practically useful information for a number of manufacturing scenarios. For instance, determining that a piece of equipment is guilty of high energy consumption is of little value if the equipment is perceived as integral to its particular process. Furthermore, continuously replacing equipment with more energy efficient equipment can be costly and inefficient. Consequently, it would be desirable to have a technique for managing industrial energy consumption / emissions that was efficient and useful.

### SUMMARY

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts of the described embodiments in a simplified form as a prelude to the more detailed description that is presented later.

Systems and methods are provided for facilitating industrial energy demand management and services. A demand management and services component obtains one or more utilization data elements via a communication network. The utilization data elements are instances of discrete data pertaining to sustainability, energy consumption, and/or emissions by manufacturing and/or facility elements. The demand management and services component analyzes the utilization data elements, and based on the analysis generates a set of user interfaces and/or provides one or more suggestions to improve energy utilization or decrease energy demand.

The analysis of the utilization data elements includes determining logical relationships, forecasting future energy demands, or determining trends in energy usage. The user interfaces can be graphical or textual displays that facilitate users in interpreting the data contained in the data elements and relationships, such as graphs, tables, databases, and so forth. The suggestions generated by the demand management and services component can include process optimizations, process modifications, process modulation, production shifts, and so forth that are directed toward improving energy utilization. The interfaces and suggestions can be accessed by remote users via a plurality of communication protocols.

To the accomplishment of the foregoing and related ends, one or more embodiments comprise the features hereinafter fully described and particularly pointed out in the claims. The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

### BRIEF DESCRIPTION OF THE DRAWINGS

FIG. 1 is an example general component block diagram illustrating a system facilitating industrial energy demand management and services in accordance with an aspect of the present specification.

FIG. 2 is an example general component block diagram illustrating a demand management and services component in accordance with an aspect of the present specification.

FIG. 3 illustrates an example system facilitating energy demand management and services in accordance with an aspect of the present specification.

FIG. 4 illustrates an example block diagram of an optimization component in accordance with an aspect of the present specification.

FIG. 5 illustrates an example methodology for industrial demand management and services in accordance with an aspect of the present specification.

FIGS. 6 and 7 are example graphical user interfaces in accordance with an aspect of the present specification.

FIG. 8 is a perspective view illustrating an example industrial controller having multiple functional modules contained in several racks joined by communication links in accordance with an aspect of the present specification.

FIG. 9 is a schematic block diagram of an example single functional module of illustrating the connection to a common backplane and communication links to communicate with other modules in accordance with an aspect of the present specification.

FIG. 10 illustrates a system that employs an artificial intelligence component which facilitates automating one or more features in accordance with the subject specification.

FIG. 11 is a schematic block diagram of a sample-computing environment with which the subject specification can interact.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It may be evident, however, that subject matter embodiments may be practiced without these specific details. In other instances, well-known structures and devices are illustrated in block diagram form in order to facilitate describing the embodiments.

As used in this application, the terms "component," "system," "object," "model," "policy," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal).

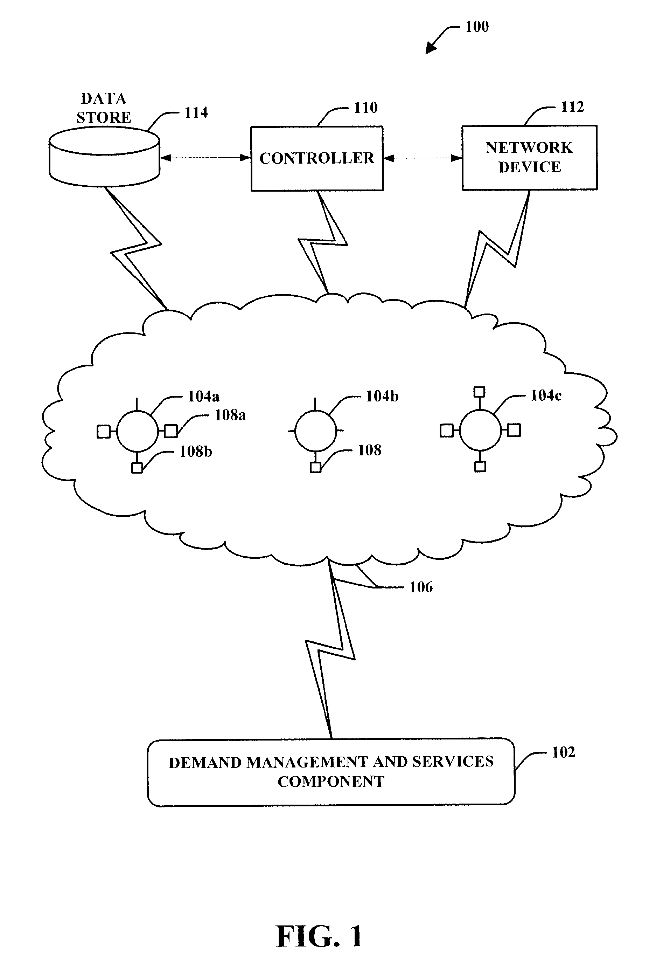

Referring initially to FIG. 1, an example system 100 facilitating industrial energy demand management and services is shown in accordance with an aspect of the present innovation. The system 100 includes a demand management and services component 102 (e.g., DMS Component) that receives, obtains, or otherwise acquires one or more utilization data elements 104 (e.g., 104a - 104c) via a communication network 106. The network 106 can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth.

The utilization data elements 104 are instances of data pertaining to sustainability factors including energy consumption. The term "Sustainability factors" is intended to assess alternative cost measures for a given process, product or plant element. For instance, sustainability factors can include utilities, energy, emissions, raw materials, waste, effluent (e.g. fluid waste), other sanitation concerns, safety, maintenance burden, component or subcomponent longevity, corporate responsibility, fair labor, and/or other products, byproducts, metrics or perceptions of sustainability, and so forth. In addition, energy consumption is intended to refer to the utilization of resources by a set of manufacturing elements, a set of facility elements, or a subset thereof. For example, manufacturing elements can include a manufacturing process, a manufacturing step, manufacturing equipment, and so forth. Similarly, a set of facility elements can include an entire facility, an area of a facility, a facility process, and the like. The resources can include but are not limited to water, air, gas, electricity, and steam (e.g., WAGES). Additionally or alternatively, the utilization of resources can also apply to the generation of emissions, such as greenhouse gases, and so forth.

A programmable logic controller 110 can be initially responsible for measuring or acquiring measurements for the utilization data elements 104. As used herein, the term controller or PLC can include functionality that can be shared across multiple components, systems, or networks. For example, one or more controllers 110 can communicate and cooperate with various network devices 112 across the network 106. This can include substantially any type of control, communications module, computer, I/O device, sensors, Human Machine Interface (HMI) that communicate *via* the network that includes control, automation, or public networks. The controller 110 can also communicate to and control various other devices such as Input/output modules including Analog, Digital, Programmed/Intelligent I/O modules, other programmable controllers, communications modules, sensors, output devices, and the like. Additionally or alternatively, the DMS component 102 can obtain the relevant data directly from one or more network devices 112.

The utilization data elements 104 can have most any suitable granularity for the data type or types represented, and can contain a plurality of elements having various granularities. For example, the utilization data elements 104 can represent discrete instances of energy consumption by one or more of the aforementioned elements. Additionally or alternatively, the utilization data elements 104 can represent energy consumption for a set (e.g., batch, lot, etc.) of elements. Furthermore, the utilization data elements 104 can have one or more associated tags 108, wherein the tags 108 are notations, metadata, and so forth. For example, the utilization data element 104a can have a first associated tag 108a communicative of one or more states relating to an element, wherein the states can include but are not limited to time, quality, production speed / rate, and so forth. In addition, the utilization data element can have a second tag 108b that identifies the element or set of elements for which the data applies. For instance, the tag 108b can include an equipment identifier, a process identifier, a sensor identifier, a location identifier, etc.

Prior to obtaining the utilization data elements 104, the DMS component 102 can interrogate or inspect the source of the data elements 104. For example, the data elements 104 can be maintained in a data store 114, wherein the DMS component 102 can inspect and/or authenticate the data elements 104 based at least in part on the tags 108. For example, the data elements 104 can be authenticated by their presence in a particular store, or on the information contained in one or more tags 108. In addition, the DMS component 102 can determine one or more data elements 104 for acquisition. For example, it may be desirable to acquire groups of data elements pertaining to various aspects of a process at separate times. Consequently, the DMS component 102 can determine which data elements 104 relate to the desired aspects based on the tags 108, and acquire only the presently desired data elements. Additionally or alternatively, the DMS component 102 can obtain the data elements 104 continuously or periodically, wherein the DMS component 102 determines the most recent data elements 104 based on tags 108 indicating a time of measurement or capture.

Furthermore, the DMS component 102 can analyze the data elements 104 and construct one or more determinations based on the analysis. For example, the DMS component 102 can forecast energy consumption, determine trends in energy consumption, or determine data relationships for the associated manufacturing or facilities elements (discussed supra) based on the data elements 104. Additionally, the DMS component 102 can generate one or more displays based on the data elements 104. For example, the DMS component 102 can generate graphical or textual displays, such as, tables, graphs, databases, and so forth that illustrate the determined forecasts, trends, and/or relationships. In addition, the DMS component 102 can generate suggestions to reduce or improve energy demand based on analysis of trends, forecasts of energy consumption, or the determined data relationships. The suggestions can include process optimizations, process modifications, process modulation, production shifts, and so forth. The displays and suggestions can be accessed by a user via the network 106 (discussed infra). It is to be appreciated that these are but a few examples; and those skilled in the art will be able to readily identify equivalent examples without departing from the scope and spirit of this innovation.

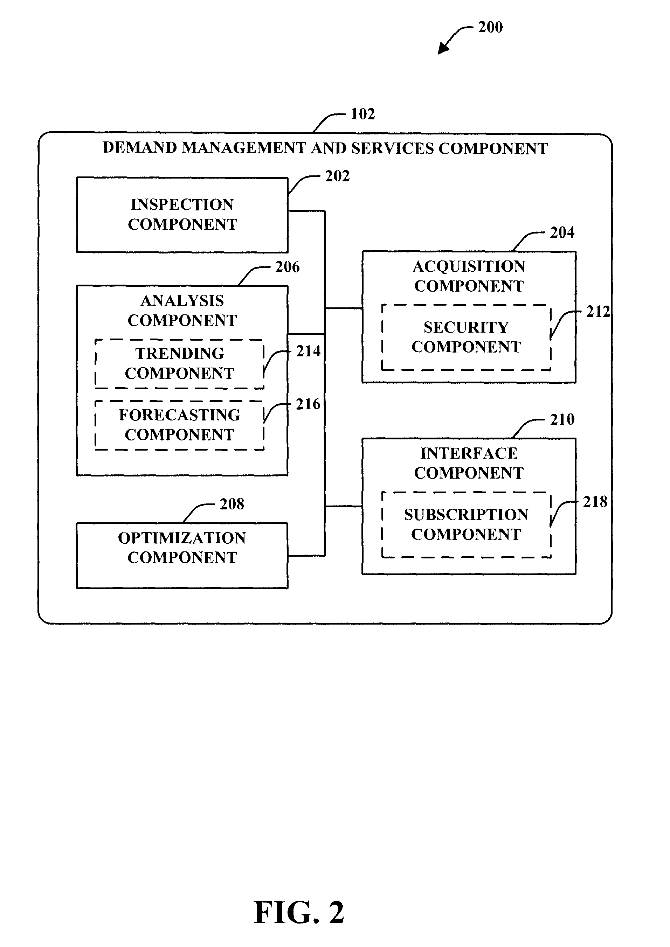

Turning now to Fig. 2, an example demand management and services component 102 is shown in accordance with an aspect of the subject innovation. The DMS component 102 includes an inspection component 202, an acquisition component 204, an analysis component 206, an optimization component 208, and an interface component 210. As discussed supra, the DMS component 102 acquires one or more utilization data elements via a communication network (See Fig. 1), and facilitates in improving and/or reducing sustainability and energy usage / demand.

The inspection component 202 can interrogate a remote location, such as a data store, for one or more desired utilization data elements. For example, if the utilization data elements (e.g., data elements) are maintained in a data store, then the inspection component 202 can interrogate, search, or otherwise query the data store for data elements satisfying one or more criteria. The criteria can include but are not limited to association with a desired manufacturing or facility element (See Fig. 1), a desired time of measurement, and so forth. The inspection component 202 can determine whether data elements are desired based at least in part on one or more tags (e.g., metadata, notations, etc.) associated with the data elements. For example, a first data element can have one or more associated tags that can describe most any property of the data element. The tags can also be user or system defined notations in order to facilitate data management.

Additionally or alternatively, the data elements can be provided, sent, or otherwise transmitted to the DMS component 102. In this example, the inspection component 202 can examine a received data packet containing one or more data elements, and ensure that the data elements are authentic, and/or intended for the DMS component 102. For example, a controller (See Fig. 1) may globally broadcast a data packet containing a plurality of data elements to multiple devices operating on a communication network. The inspection component 202 determines that the data packet is authentic based on one or more properties of the data packet (e.g., sender, metadata, etc.), and determines that one or more data elements contained in the data packet are intended for the DMS component 102.

The acquisition component 204 transfers (e.g., downloads, receives, etc.) the desired data elements to the DMS component 102. For instance, the inspection component 202 can determine that a plurality of data elements in a data store are desired, and the acquisition component 204 can obtain the data elements from the data store via the previously mentioned communication network. It is to be appreciated that the data elements can be transmitted between distinct operators across a global communication infrastructure such as the internet, or may be transmitted across domains residing on a commonly owned or controlled network (e.g., local area network). For example, a manufacturing facility can include a plurality of data stores, controllers, network devices, and so forth, wherein the DMS component 102 is a third party tool that obtains data elements form the devices via the Internet. As an alternative example, the DMS component 102 can reside on a local area network, wherein the data elements are communicated from the devices to the DMS component across commonly controlled domains on the local area network.

The acquisition component 204 includes a security component 212 that is responsible for securely transmitting and/or receiving data elements across communication networks. The data elements may contain information that is considered proprietary, restricted, or otherwise confidential, wherein the security component 212 can implement one or more measures to maintain the security of said information. For example, the security component 212 can employ a public key infrastructure with the source devices (e.g., controller, data store, network devices, etc.). Additionally or alternatively, the security component 212 can encrypt the data elements prior to transmitting them across the communication network, or can decipher encrypted data elements received by the DMS component 102. It is to be appreciated that these are but a few examples, and virtually any technique for securing transmitted data can be applied within the scope and spirit of the subject innovation.

Furthermore, the analysis component 206 can examine, evaluate, or otherwise analyze the data elements. For instance, the analysis component 206 analyzes the data elements, and based on the analysis determines logical relationships between the data elements and/or other factors. For instance, the analysis component 206 can analyze a set of data elements pertaining to discrete energy consumption by a heating element, and can correlate the energy consumption of the elements to a plurality of factors, such as time, temperature, process factors (e.g., rate, quality, etc.), and so forth. In addition, the analysis component 206 includes a trending component 214, and a forecasting component 216. The trending component 214 determines trends relating to the data elements, or a subset thereof, based at least in part on an aggregate of the analyzed data elements. Returning to the previous example, the trending component 214 can determine a pattern of energy consumption by the heating element with relation to one or more determined logical relationships. The forecasting component 216 determines, predicts, or otherwise forecast sustainability factors including energy consumption based on the aggregated analyzed data elements. For instance, the forecasting component 216 can predict energy consumption by the heating element for a desired interval based on the analyzed data relating to said heating element and one or more logical relationships.

The optimization component 208 can modify or suggest modifications (e.g., optimizations) for processes directed toward improving sustainability, energy demand, and/or emissions generation based on the logical data relationships, trends, or forecasts determined by the analysis component 206. Optimizations can include but are not limited to production shifts, process modifications, production modulation, process / production scheduling, and so forth. For example, the DMS component 102 can obtain data elements from a first and second location, and based on analysis of the data elements from the locations the optimization component can determine that it may be more efficient (e.g., in terms of cost, energy usage, emissions generation, etc.) to shift execution (e.g., production shift) of a process from the first location to the second location, or the time at which the process is executed at the first location, and so forth.

Moreover, the interface component 210 exposes one or more interfaces that provide graphical or textual representations of the data elements, analysis, forecasts, trends, or optimizations that facilitate users in understanding and interpreting the information contained therein. In addition, the interface component 210 can receive various inputs; the inputs can include explicit user inputs (e.g., configuration selections, question/answer) such as from mouse selections, keyboard selections, speech, and so forth. The interface component 210 enables user interaction with at least one of the inspection component 202, the acquisition component 204, the analysis component 206, or the optimization component 208. User interaction can be enabled through a plurality of means, such as a series of graphical user interfaces (GUI), For example, the interface component 210 can expose one of more interfaces that enable modification of the analysis, trending, forecasting, or optimizations.

The interface component 210 can arrange, systematize, or otherwise organize the information in most any suitable manner, including but not limited to charts, graphs, spreadsheets, tables, and so forth. In addition, the interface component 210 enables users to access the interfaces via the communication network. For example, a set of data elements can be obtained by the DMS component 102 from a first location via the Internet, and the interface component 210 can provide one or more interfaces to users at the first location via the Internet. The interface component 210 can also include a subscription component 218 that manages access to the interfaces provided by the interface component 210. For example, the subscription component 218 can maintain security credentials (e.g., username, password, security key, etc.) that users must provide in order to access the interfaces. In addition, the subscription component 218 can manage payments or other authorizations required from users in order to gain credentials necessary for access to the interfaces. For instance, users may be required to submit a product key and/or a monetary payment at regular intervals to gain access to the interfaces.

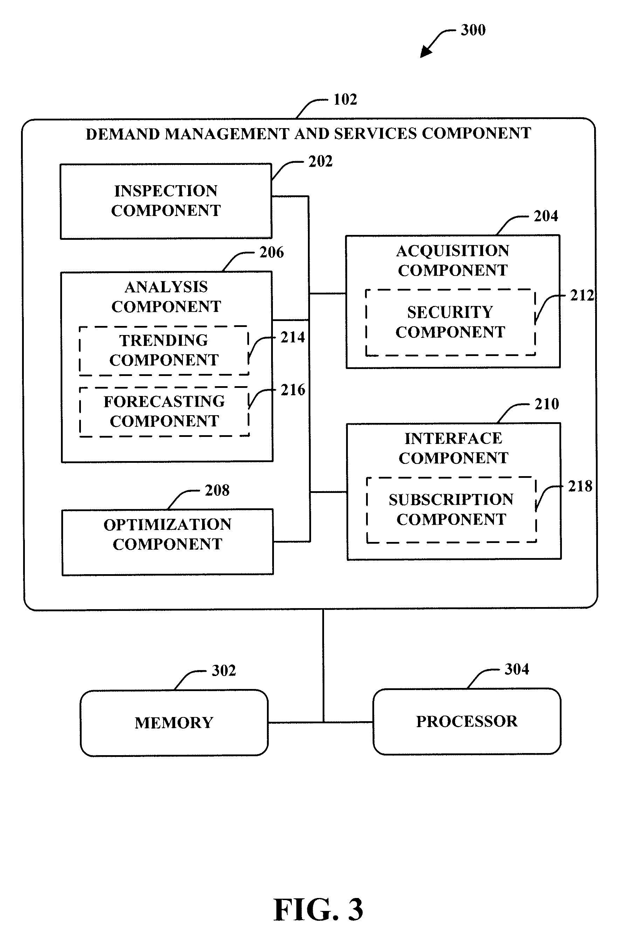

Fig. 3 illustrates an example system facilitating energy demand management and services in accordance with an aspect of the subject innovation. The system 300 includes a demand management and services component 102 that acquires one or more utilization data elements via a communication network (See Fig. 1), and facilitates in improving and/or reducing sustainability and energy usage / demand. As discussed previously, the DMS component 102 includes an inspection component 202 that can interrogate a source for desired data elements or authenticate received data elements. The DMS component 102 also includes an acquisition component 204 that acquires one or more data elements across a communication network, and is responsible for protecting the data elements during transmission across the communication network. An analysis component 206 analyzes the data elements, and an optimization component 208 optimizes processes or provides optimization suggestions based on the analysis. Also, an interface component 210 is included in the DMS component 102 that exposes one or more interfaces and facilitates user interaction with the DMS component and subcomponents thereof.

System 300 can additionally comprise memory 302 that is operatively coupled to the DMS component 102 and that stores data elements or information related to data elements, security, analysis, interfaces, subscription services, and any other suitable information related to facilitating demand management and services. A processor 304 can be operatively connected to the DMS component 102 (and/or memory 302) to facilitate storing and/or communicating content and the like. It is to be appreciated that processor 304 can be a processor dedicated to obtaining data elements, analysis, and/or generating interfaces, a processor that controls one or more components of system 300, and/or a processor that obtains and analyzes data elements, generates interfaces, and controls one or more components of system 300.

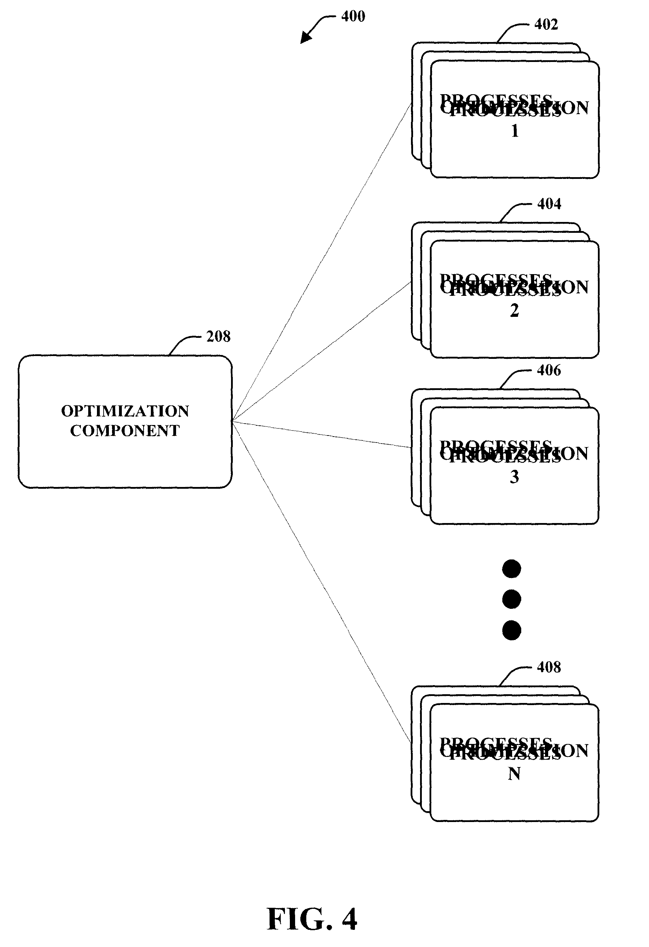

Fig. 4 is an example block diagram of an optimization component 208 in accordance with an aspect of the subject innovation. As previously discussed, the optimization component 208 can modify or suggest modifications (e.g., optimizations) for processes, wherein the modifications are directed toward improving sustainability, energy demand, and/or emissions generation based on determined logical data relationships, trends, or forecasts. The optimization component 208 can generate N suggested or implemented optimizations based at least in part on analyzed data elements, where N is an integer. For instance, the optimization component 208 can determine a first optimization 402, suggesting it would be beneficial to shift a process or production (e.g., production shift) from a first location to a second location based on a set of factors. The factors can include the efficiency of the second location for the given process, or the price of energy at the second location compared to the first location. Additionally, the optimization component 208 can generate a second optimization 404, wherein the second optimization 404 details a set of process modifications that would be effective in improving sustainability for a given process. Moreover, the optimization component 208 can determine a third optimization 406 directed toward modulating production to reduce energy consumption for a given process. Production modulation can include, for example, decreasing and increasing production based on a set of factors, such as an energy consumption threshold, an emissions cap, and so forth. Similarly, the optimization component 208 can determine an N^{th} optimization 408, wherein the Nth optimization can include virtually any optimization that can be determined from the data elements, and analysis thereof to at least one of improve sustainability, reduce or improve energy consumption, or reduce emissions. It is to be appreciated that these are but a few examples, and multiple additional or alternative examples are possible within the scope and spirit of the subject innovation.

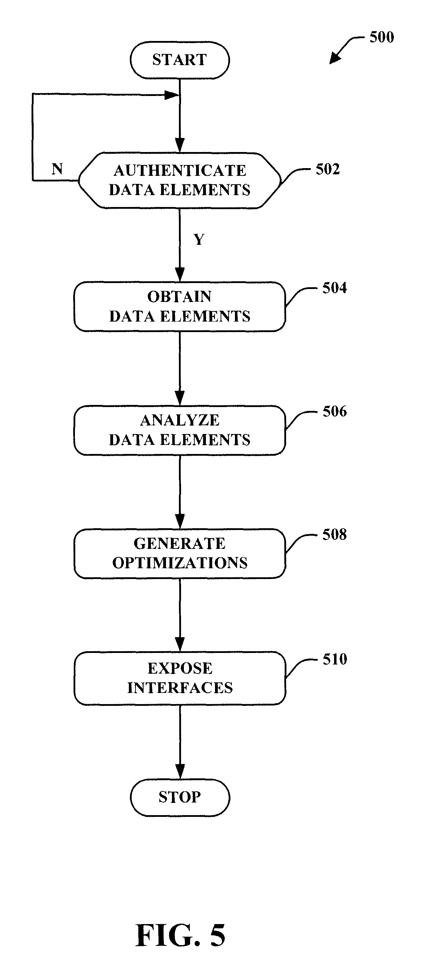

In view of the example systems described supra, methodologies that may be implemented in accordance with the disclosed subject matter will be better appreciated with reference to the flow chart of Fig. 5. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter.

Turning to Fig. 5, an example methodology for industrial demand management and services is shown in accordance with an aspect of the subject innovation. At 502, one or more data elements can be authenticated. For instance, a source can be queried for desired data elements, and the data elements can be authenticated based on the data elements existence in the source, or one or more properties of the data elements. Additionally or alternatively, one or more data elements can be received in a data packet, and the data elements can be authenticated based on one or more properties of the data packet (e.g., sender, etc.). If the data elements cannot be authenticated (e.g., N at 502), then they are not obtained and methodology returns to the beginning.

If the data elements are authenticated (e.g., Y at 502), then at 504 one or more desired data elements are received, acquired, or otherwise obtained As stated above, the data elements can be transmitted between distinct operators across a global communication infrastructure such as the internet, or may be transmitted across domains residing on a commonly owned or controlled network (e.g., local area network). For example, a manufacturing facility can include a plurality of data stores, controllers, network devices, and so forth, wherein the data elements are obtained by a third party via the Internet. As an alternative example, the data elements can reside on a local area network, wherein the data elements are communicated from the devices across commonly controlled domains on the local area network.

The data elements may contain information that is considered proprietary, restricted, or otherwise confidential, and one or more security measures can be implemented to protect the data elements. For example, a public key infrastructure can be employed to preserve the confidentiality of the data elements. It is to be appreciated that this but one example used for brevity and clarity of explanation; virtually any method for securing transmitted data can be applied within the scope and spirit of the subject innovation.

At 506, the data elements are examined, evaluated, or otherwise analyzed. For instance, a set of logical relationships can be determined among the data elements, or between the data elements and other factors. In addition, analyzing the data elements can include determining trends relating to the data elements, or a subset thereof, based on the aggregated analyzed data elements or a subset thereof. Furthermore, analyzing the data elements can include forecasting sustainability, energy consumption, or emissions based on the aggregated analyzed data elements or a subset thereof.

At 508, one or more optimizations can be generated and/or proposed based at least in part on the analyzed data elements. In general, the optimizations can be geared toward improving sustainability, reducing or improving energy demand, and/or improving emissions generation based on the logical data relationships, trends, or forecasts determined at 506. Optimizations can include but are not limited to production shifts, process modifications, production modulation, process / production scheduling, and so forth.

At 510, one or more interfaces are exposed that provide graphical or textual representations of the data elements, analysis, forecasts, trends, or optimizations that facilitate users in understanding and interpreting the information contained therein. Interaction with the interfaces can be achieved via various inputs, including explicit user inputs (e.g., configuration selections, question/answer) such as from mouse selections, keyboard selections, speech, and so forth. User interaction can be enabled through a plurality of means, such as a series of graphical user interfaces (GUI). The interfaces can arrange, systematize, or otherwise organize the information in most any suitable manner, including but not limited to charts, graphs, spreadsheets, tables, and so forth. In addition, the interfaces can be accessed via a communication network (discussed supra). Access to the interfaces can be restricted via security credentials (e.g., username, password, security key, etc.) that users must provide in order to access the interfaces. In addition, users can be required to submit a product key, monetary payment, etc. to gain access to the interfaces.

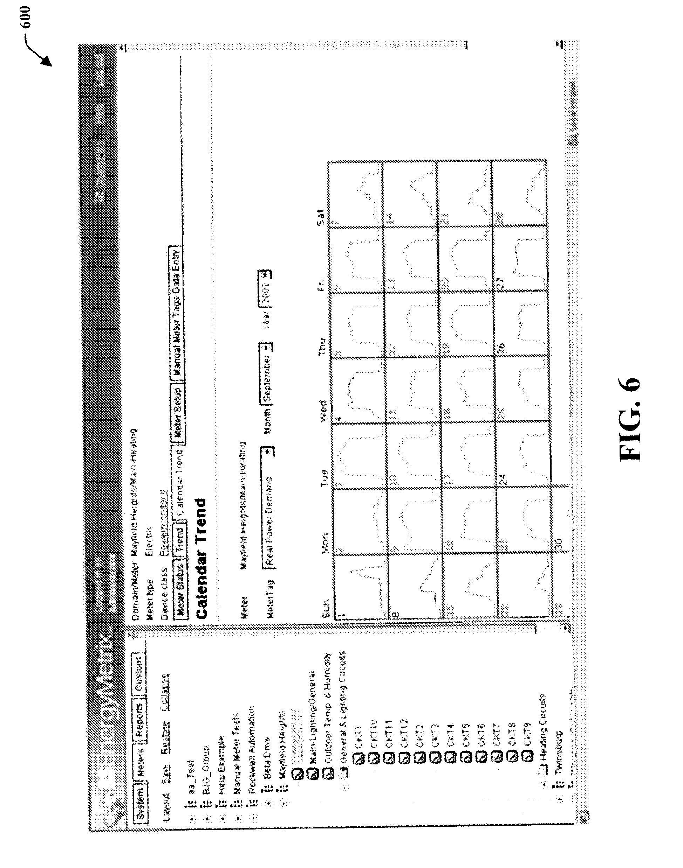

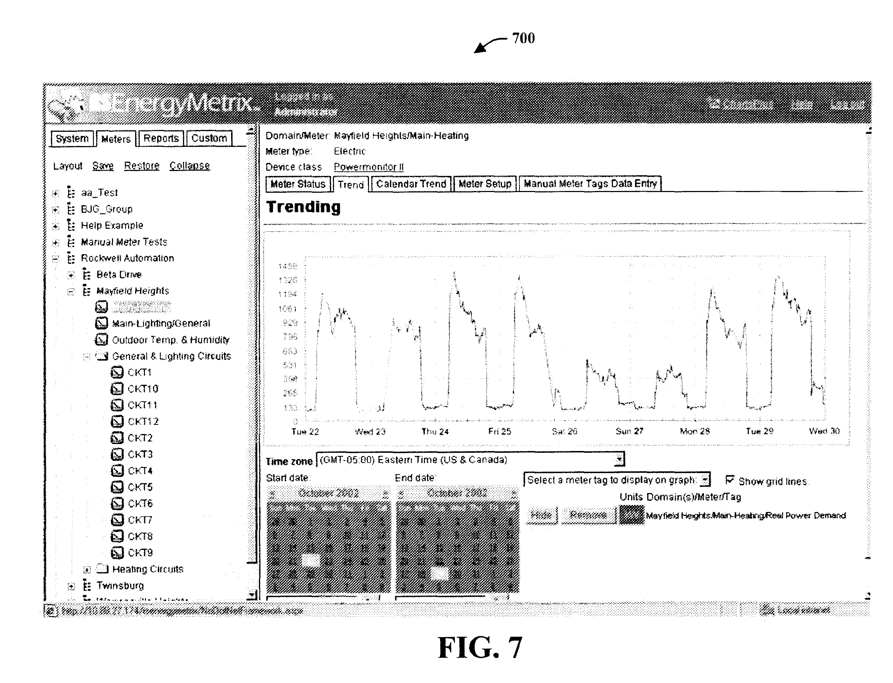

Figs. 6 and 7 are example graphical user interfaces in accordance with an aspect of the subject innovation. As discussed previously, one or more interfaces can be exposed that facilitate users in understanding and interpreting the information contained in data elements, analysis, forecasts, trends, or optimizations. Interaction with the interfaces can be achieved via various inputs, including explicit user inputs (e.g., configuration selections, question/answer) such as from mouse selections, keyboard selections, speech, and so forth.

Fig. 6 is an example interface illustrating a determined trend of real power demand plotted on a monthly calendar. In this example, the interface enables users to quickly and easily appreciate the determined trend and associated logical relationships (e.g., date, day, etc.). In addition, the interface 600 includes a plurality of inputs (e.g., drop down menu, selection buttons, etc.) that allows users to interact with, select, and manipulate various representations of the data. Similarly, Fig. 7 is an example interface illustrating a determined trend of real power demand plotted on a weekly calendar.

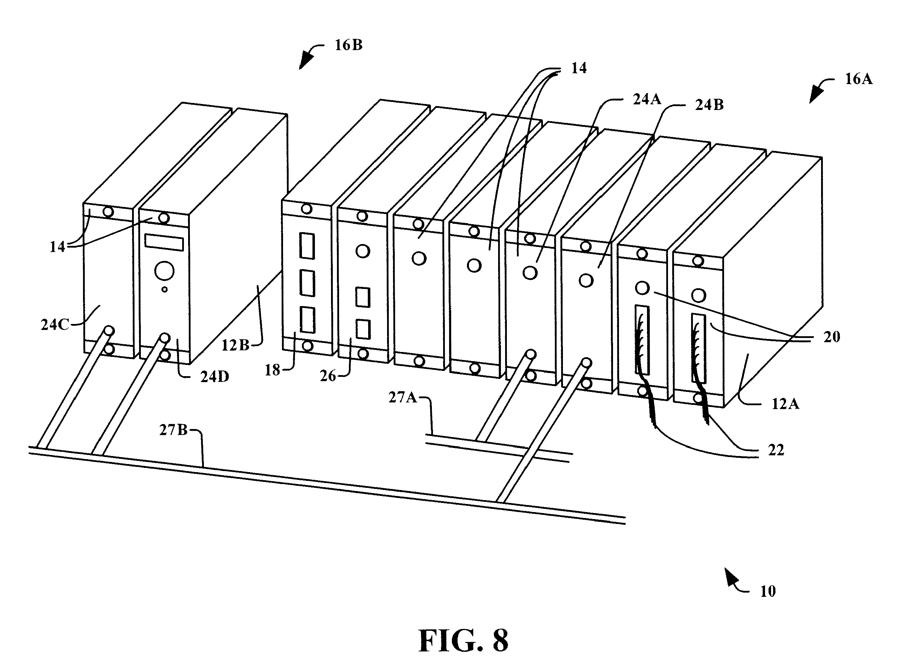

Referring to FIG. 8, a distributed industrial control system 10 suitable for use with the present invention provides a first and second rack 12A and 12B for holding a number of functional modules 14 electrically interconnected by backplanes 16A and 16B running along the rear of the racks 12A and 12B respectively. Each module 14 may be individually removed from the rack 12A or 12B thereby disconnecting it from its respective backplane 16 as will be described below for repair or replacement and to allow custom configuration of the distributed system 10.

The modules 14 within the rack 12A may include, for example, a power supply module 18, a processor module 26, two communication modules 24A and 24B and two I/O modules 20. A power supply module 18 receives an external source of power (not shown) and provides regulated voltages to the other modules 14 by means of conductors on the backplane 16A.

The I/O modules 20 provide an interface between inputs from, and outputs to external equipment (not shown) via cabling 22 attached to the I/O modules 20 at terminals on their front panels. The I/O modules 20 convert input signals on the cables 22 into digital words for transmission on the backplane 16A. The I/O modules 20 also convert other digital words from the backplane 16A to the necessary signal levels for control of equipment.

The communication modules 24A and 24B provide a similar interface between the backplane 16A and one of two external high speed communication networks 27A and 27B. The high speed communication networks 27A and 27B may connect with other modules 14 or with remote racks of I/O modules 20 or the like. In the example illustrated, the high speed communication network 27A connects with backplane 16A via the communication module 24A, whereas the high speed communication network 27B connects the communication module 24B with communication modules 24C and 24D in rack 12B.

The processor module 26 processes information provided by the communication modules 24A and 24B and the I/O modules 20 according to a stored program and provides output information to the communication module 24 and the I/O modules 20 in response to that stored program and received input messages.

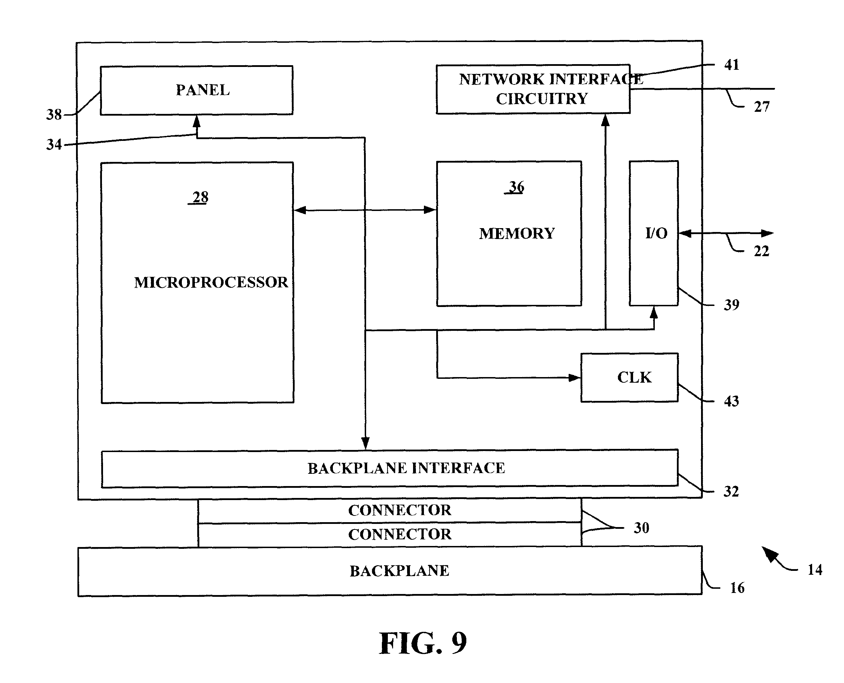

Referring also to FIG. 9, each functional module 14, is attached to the backplane 16 by means of a separable electrical connector 30 that permits the removal of the module 14 from the backplane 16 so that it may be replaced or repaired without disturbing the other modules 14. The backplane 16 provides the module 14 with both power and a communication channel to the other modules 14.

Local communication with the other modules 14 through the backplane 16 is accomplished by means of a backplane interface 32 which electrically connects the backplane 16 through connector 30. The backplane interface 32 monitors messages on the backplane 16 to identify those messages intended for the particular module 14, based on a message address being part of the message and indicating the message's destination. Messages received by the backplane interface 32 are conveyed to an internal bus 34 in the module 14.

The internal bus 34 joins the backplane interface 32 with a memory 36, a microprocessor 28, front panel circuitry 38, I/O interface circuitry 39 (if the module is an I/O module 20) and communication network interface circuitry 41 (if the module is a communication module 24). The microprocessor 28 may be a general purpose microprocessor providing for the sequential execution of instructions contained in memory 36 and the reading and writing of data to and from the memory 36 and the other devices associated with the internal bus 34.

The microprocessor 28 includes an internal clock circuit (not shown) providing the timing of the microprocessor 28 but may also communicate with an external precision clock 43 of improved precision. This clock 43 may be a crystal controlled oscillator or other time standard including a radio link to an NBS time standard. The precision of the clock 43 is recorded in the memory 36 as a quality factor. The panel circuitry 38 includes status indication lights such as are well known in the art and manually operable switches such as for locking the module 14 in the off state.

The memory 36 holds programs executed by the microprocessor 28 to provide the functions as will be described and also variables and data necessary for the execution of those programs. For I/O modules 20, the memory 36 also includes an I/O table holding the current state of inputs and outputs received from and transmitted to the industrial controller 10 via the I/O modules 20.

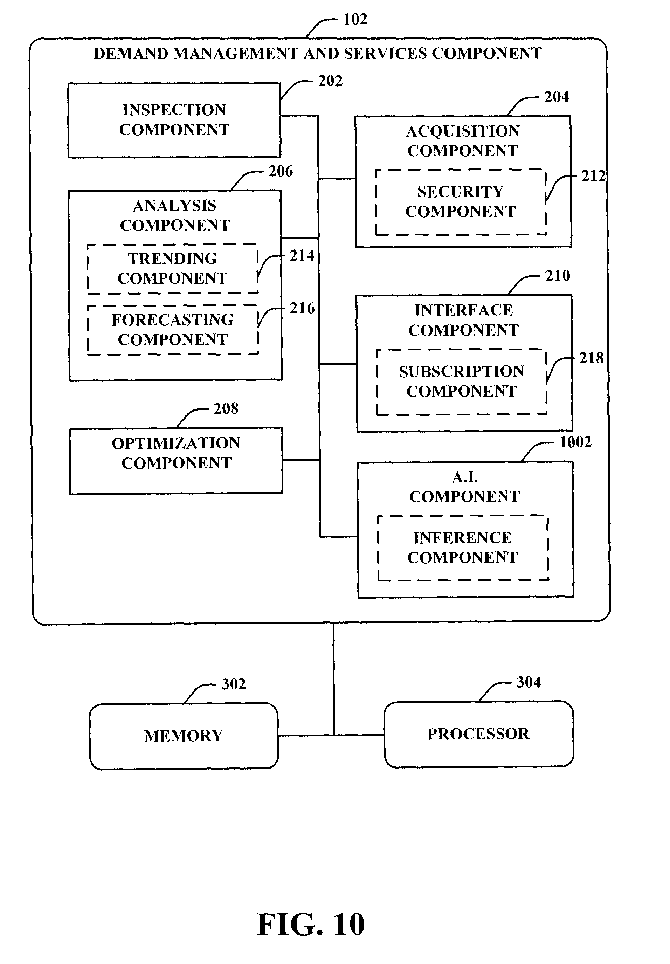

FIG. 10 illustrates a system 1000 that employs an artificial intelligence (AI) component 1002 which facilitates automating one or more features in accordance with the subject innovation. The subject innovation (e.g., in connection with inferring) can employ various AI-based schemes for carrying out various aspects thereof. For example, a process for analyzing data elements or generating optimizations can be facilitated via an automatic classifier system and process.

As used herein, the term "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Furthermore, inference can be based upon logical models or rules, whereby relationships between components or data are determined by an analysis of the data and drawing conclusions there from. For instance, by observing that one user interacts with a subset of other users over a network, it may be determined or inferred that this subset of users belongs to a desired social network of interest for the one user as opposed to a plurality of other users who are never or rarely interacted with.

Directed and undirected model classification approaches including, for example, naïve Bayes, Bayesian networks, decision trees, neural networks, fuzzy logic models, and probabilistic classification models providing different patterns of independence can be employed. Classification as used herein also is inclusive of statistical regression that is utilized to develop models of priority.

As will be readily appreciated from the subject specification, the subject innovation can employ classifiers that are explicitly trained (e.g., via a generic training data) as well as implicitly trained (e.g., via observing user behavior, receiving extrinsic information). Thus, the classifier(s) can be used to automatically learn and perform a number of functions, including but not limited to determining according to a predetermined criteria when to update or refine the previously inferred schema, tighten the criteria on the inferring algorithm based upon the kind of data being processed (e.g., financial versus non-financial, personal versus non-personal,...), and at what time of day to implement tighter criteria controls (e.g., in the evening when system performance would be less impacted).

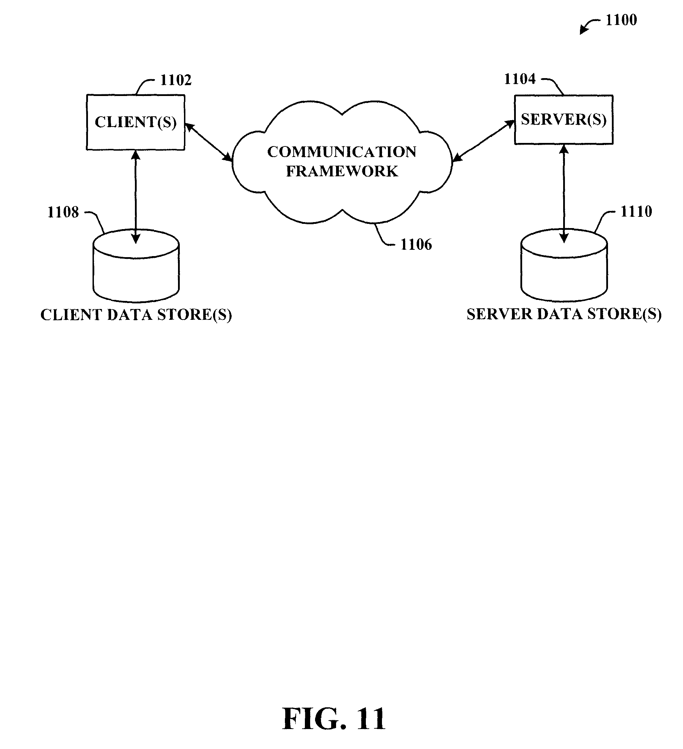

Referring now to FIG. 11, there is illustrated a schematic block diagram of an example computing environment 1100 in accordance with the subject innovation. The system 1100 includes one or more client(s) 1102. The client(s) 1102 can be hardware and/or software (e.g., threads, processes, computing devices). The client(s) 1102 can house cookie(s) and/or associated contextual information by employing the innovation, for example.

The system 1100 also includes one or more server(s) 1104. The server(s) 1104 can also be hardware and/or software (e.g., threads, processes, computing devices). The servers 1104 can house threads to perform transformations by employing the innovation, for example. One possible communication between a client 1102 and a server 1104 can be in the form of a data packet adapted to be transmitted between two or more computer processes. The data packet may include a cookie and/or associated contextual information, for example. The system 1100 includes a communication framework 1106 (e.g., a global communication network such as the Internet) that can be employed to facilitate communications between the client(s) 1102 and the server(s) 1104.

Communications can be facilitated via a wired (including optical fiber) and/or wireless technology. The client(s) 1102 are operatively connected to one or more client data store(s) 1108 that can be employed to store information local to the client(s) 1102 (e.g., cookie(s) and/or associated contextual information). Similarly, the server(s) 1104 are operatively connected to one or more server data store(s) 1110 that can be employed to store information local to the servers 1104.

What has been described above includes examples of the innovation. It is, of course, not possible to describe every conceivable combination of components or methodologies for purposes of describing the subject innovation, but one of ordinary skill in the art may recognize that many further combinations and permutations of the innovation are possible. Accordingly, the innovation is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**The following is a list of further preferred embodiments of the invention:**
Embodiment 1: An energy demand management and services system, comprising:
   at least one processor coupled to memory retaining instructions for:
   an acquisition component that obtains at least one utilization data element via a communication network, wherein the utilization data elements are instances of discrete data pertaining to at least one of sustainability, energy consumption, or emissions by at least one of manufacturing elements or facility elements;
   an analysis component employs the utilization data elements to at least one of forecast the sustainability, energy consumption, or emissions, determine at least one trend for the sustainability, energy consumption, or emissions, or identify logical data relationships for the sustainability, energy consumption, or emissions; and
   an interface component for displaying representations of at least one of the utilization data elements, forecasts, trends, or relationships.
Embodiment 2: The system of embodiment 1, further comprising an optimization component that generates at least one suggestion for improving sustainability, reducing energy demand, or reducing emissions based on at least one of the utilization data elements, forecasts, trends, or logical data relationships.
Embodiment 3: The system of embodiment 2, wherein the optimization component automatically implements the suggestion.
Embodiment 4: The system of embodiment 2, wherein the interface component generates at least one interface to display the suggestions.
Embodiment 5: The system of embodiment 1, further comprising an inspection component that at least one of interrogates a source for at least one utilization data element satisfying one or more criteria, or authenticates the utilization data elements based on one or more criteria.
Embodiment 6: The system of embodiment 1, wherein the acquisition component includes a security component that at least one of encrypts the utilization data elements, deciphers the utilization data elements, or employs a public key infrastructure.
Embodiment 7: The system of embodiment 1, further comprising an artificial intelligence component that facilitates automating at least one of the analysis component, optimization component, or interface component.
Embodiment 8: The system of embodiment 1, wherein the utilization data elements are initially generated by at least one of a controller or network device maintained by a first administrator.
Embodiment 9: The system of embodiment 8, wherein the energy demand management and services system is maintained by someone other than the first administrator.
Embodiment 10: The system of embodiment 1, wherein the communication network includes at least one of the Internet, an intranet, a control and information protocol network, a wireless network, a local area network, Ethernet, DH/DH+, Remote I/O, Fieldbus, Modbus, Profibus, or serial protocols.
Embodiment 11: A methodology facilitating sustainability, comprising:
   employing a processor executing computer executable instructions stored on a computer readable storage medium to implement the following acts:
      acquiring at least one discrete data element associated with at least one of a manufacturing process or a facility process, wherein the discrete data elements relate to at least one of sustainability, energy consumption, or emissions;
      analyzing the data elements, wherein the analysis includes at least one of predicting future sustainability, energy consumption, or emissions, determining tendencies for sustainability, energy consumption, or emissions, or identifying relationships between the data elements for sustainability, energy consumption, or emissions;
      generating at least one proposed optimization based at least in part on the analysis of the data elements; and
      exposing at least one interface that displays at least one of a graphical or textual representation of the data elements, analysis of the data elements, or suggested optimizations.
Embodiment 12: The method of embodiment 11, wherein the proposed optimizations include at least one of a production shift, a process modification, a production modulation, or a modification to production scheduling.
Embodiment 13: The method of embodiment 12, wherein the proposed optimization is automatically employed.
Embodiment 14: The method of embodiment 11, wherein the discrete data elements are acquired from at least one of a controller, a network device, or a data store.
Embodiment 15: The method of embodiment 11, further comprising examining at least one of a data packet, a data store, a network, a controller, or a network device for at least one discrete data element having one or more predetermined properties.
Embodiment 16: The method of embodiment 11, further comprising enabling users to access the interfaces via a communication network, and requiring a set of security credentials from the users.
Embodiment 17: A computer-implemented system facilitating energy demand management and services, comprising:
   means for querying at least one of a data packet, a data store, a network, a controller, or a network device for at least one utilization data element having one or more predetermined desirable properties, wherein the utilization data elements are discrete data units associated with at least one of a set of manufacturing elements, or a set facility elements, and include information pertaining to at least one of sustainability, energy consumption, or emissions;
   means for securely obtaining at least one of the utilization data elements;
   means for examining the obtained utilization data elements, wherein examination includes at least one of forecasting future sustainability, future energy consumption, or future emissions, determining trends for sustainability, energy consumption, or emissions, or determining data relationships for sustainability, energy consumption, or emissions;
   means for determining at least one proposed optimization based at least in part on the examination of the data elements;
   means for displaying at least one interface, via a communication network, that displays at least one of a graphical or textual representation of at least one of the data elements, analysis of the data elements, or the proposed optimizations; and
   means for requiring users to present one or more security credentials to access the interfaces via a communication network.
Embodiment 18: The system of embodiment 17, further comprising means for automatically implementing the proposed optimizations by communicating a set of instructions to at least one of a controller or a network device.
Embodiment 19: The system of embodiment 17, wherein the proposed optimizations include at least one of shifting production, modifying a process, modulating production, or scheduling production.
Embodiment 20: The system of embodiment 17, wherein the means for securely obtaining includes at least one of encrypting the utilization data elements, deciphering encrypted utilization data elements, or employing a public key infrastructure.

## Claims

1. An energy demand management and services system, comprising:
at least one processor coupled to memory retaining instructions for:
an acquisition component that obtains at least one utilization data element via a communication network, wherein the utilization data elements are instances of discrete data pertaining to at least one of sustainability, energy consumption, or
emissions by at least one of manufacturing elements or facility elements;
an analysis component employs the utilization data elements to at least one of forecast the sustainability, energy consumption, or emissions, determine at least one trend for the sustainability, energy consumption, or emissions, or identify logical data relationships for the sustainability, energy consumption, or emissions; and
an interface component for displaying representations of at least one of the utilization data elements, forecasts, trends, or relationships.

2. The system of claim 1, further comprising an optimization component that generates at least one suggestion for improving sustainability, reducing energy demand, or reducing emissions based on at least one of the utilization data elements, forecasts, trends, or logical data relationships.

3. The system of claim 2, wherein the optimization component automatically implements the suggestion.

4. The system of claim 2 or 3, wherein the interface component generates at least one interface to display the suggestions.

5. The system of one of claims 1 to 4, further comprising an inspection component that at least one of interrogates a source for at least one utilization data element satisfying one or more criteria, or authenticates the utilization data elements based on one or more criteria.

6. The system of one of claims 1 to 5, wherein the acquisition component includes a security component that at least one of encrypts the utilization data elements, deciphers the utilization data elements, or employs a public key infrastructure.

7. The system of one of claims 1 to 6, further comprising an artificial intelligence component that facilitates automating at least one of the analysis component, optimization component, or interface component.

8. The system of one of claims 1 to 7, wherein the utilization data elements are initially generated by at least one of a controller or network device maintained by a first administrator, and/or
wherein the energy demand management and services system is maintained by someone other than the first administrator.

9. The system of one of claims 1 to 8, wherein the communication network includes at least one of the Internet, an intranet, a control and information protocol network, a wireless network, a local area network, Ethernet, DH/DH+, Remote I/O, Fieldbus, Modbus, Profibus, or serial protocols.

10. A methodology facilitating sustainability, comprising:
employing a processor executing computer executable instructions stored on a computer readable storage medium to implement the following acts:
acquiring at least one discrete data element associated with at least one of a manufacturing process or a facility process, wherein the discrete data elements relate to at least one of sustainability, energy consumption, or emissions;
analyzing the data elements, wherein the analysis includes at least one of predicting future sustainability, energy consumption, or emissions, determining tendencies for sustainability, energy consumption, or emissions, or identifying relationships between the data elements for sustainability, energy consumption, or emissions;
generating at least one proposed optimization based at least in part on the analysis of the data elements; and
exposing at least one interface that displays at least one of a graphical or textual representation of the data elements, analysis of the data elements, or suggested optimizations.

11. The method of claim 10, wherein the proposed optimizations include at least one of a production shift, a process modification, a production modulation, or a modification to production scheduling, and/or
wherein the proposed optimization is automatically employed.

12. The method of claim 10 or 11, wherein the discrete data elements are acquired from at least one of a controller, a network device, or a data store.

13. The method of claim 10 to 12, further comprising examining at least one of a data packet, a data store, a network, a controller, or a network device for at least one discrete data element having one or more predetermined properties, or
further comprising enabling users to access the interfaces via a communication network, and requiring a set of security credentials from the users.

14. A computer-implemented system facilitating energy demand management and services, comprising:
means for querying at least one of a data packet, a data store, a network, a controller, or a network device for at least one utilization data element having one or
more predetermined desirable properties, wherein the utilization data elements are discrete data units associated with at least one of a set of manufacturing elements, or
a set facility elements, and include information pertaining to at least one of sustainability, energy consumption, or emissions;
means for securely obtaining at least one of the utilization data elements;
means for examining the obtained utilization data elements, wherein examination includes at least one of forecasting future sustainability, future energy consumption,
or future emissions, determining trends for sustainability, energy consumption, or
emissions, or determining data relationships for sustainability, energy consumption,
or emissions;
means for determining at least one proposed optimization based at least in part on the examination of the data elements;
means for displaying at least one interface, via a communication network, that displays at least one of a graphical or textual representation of at least one of the data elements, analysis of the data elements, or the proposed optimizations; and
means for requiring users to present one or more security credentials to access the interfaces via a communication network.

15. The system of claim 14, further comprising means for automatically implementing the proposed optimizations by communicating a set of instructions to at least one of a controller or a network device, or
wherein the proposed optimizations include at least one of shifting production, modifying a process, modulating production, or scheduling production, or
wherein the means for securely obtaining includes at least one of encrypting the utilization data elements, deciphering encrypted utilization data elements, or employing a public key infrastructure.
